(19) **Europäisches Patentamt / European Patent Office / Office européen des brevets**

(11) **EP 2 905 301 B1**

(12) **FASCICULE DE BREVET EUROPEEN**

(45) Date de publication et mention de la délivrance du brevet:
**12.12.2018 Bulletin 2018/50**

(21) Numéro de dépôt: **15151977.4**

(22) Date de dépôt: **21.01.2015**

(51) Int Cl.:
**C08H 8/00** (2010.01)     **C08J 5/04** (2006.01)
**C08L 23/12** (2006.01)     **C08L 67/04** (2006.01)
**C08L 97/02** (2006.01)     **C09J 123/12** (2006.01)
**C09J 167/04** (2006.01)     **A01G 17/06** (2006.01)
**A01G 17/14** (2006.01)     **A01G 17/08** (2006.01)

(54) **Accessoire agricole réalisé à partir d'un matériau composite et procédé d'obtention dudit accessoire agricole**

Landwirtschaftliches Zubehörteil, das aus einem Verbundmaterial gefertigt ist und Herstellung eines solchen landwirtschaftlichen Zubehörteils

Agricultural implement made using a composite material and method for obtaining said agricultural implement

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.02.2014 FR 1450918**
**06.02.2014 FR 1450919**

(43) Date de publication de la demande:
**12.08.2015 Bulletin 2015/33**

(73) Titulaire: **Bidault, Stephane**
**21200 Beaune (FR)**

(72) Inventeur: **Bidault, Stephane**
**21200 Beaune (FR)**

(74) Mandataire: **Chevalier, Renaud Philippe et al**
**Cabinet Germain & Maureau**
**BP 6153**
**69466 Lyon Cedex 06 (FR)**

(56) Documents cités:
WO-A1-02/15672     DE-A1- 2 933 550
DE-U1- 20 101 950     DE-U1- 20 213 530
FR-A- 966 604     FR-A- 1 169 761
FR-A- 1 444 912     FR-A1- 2 232 434
FR-A1- 2 573 617     FR-A1- 2 632 364
FR-A1- 2 647 633     FR-A1- 2 733 989
FR-A1- 2 816 344     FR-A1- 2 826 832
US-A1- 2013 331 518

• G. A. NTALOS ET AL.: "Characterization and utilisation of vine prunings as a wood substitute for particleboard production", INDUSTRIAL CROPS AND PRODUCTS, vol. 16, 2002, pages 59-68, XP002726322,

**Description**

L'invention concerne le domaine de la viticulture et plus particulièrement un accessoire agricole utilisé en viticulture formé par un matériau composite et un procédé d'obtention de cet accessoire agricole.

Généralement, les sarments de vignes sont taillés pendant la période hivernale. Cette taille génère entre 2250 et 3500 kg de sarments par hectare de vigne, ce qui est d'autant moins négligeable que la France compte 790 000 hectares de vignes. Une fois taillés et stockés, ces sarments sont brûlés à défaut d'être utilisés, ce qui génère des dispersions de $CO_2$ dans l'atmosphère.

L'article "Characterization and utilisation of vine prunings as a wood substitute for particleboard production", par Georgios A. Ntalos et Athanasios H. Grigoriou, dans Industrial Crops and Products, volume 16 (2002), pages 59-68, décrit l'utilisation de poudre de sarments de vigne comme substitut du bois dans des panneaux de particules.

Le document FR 2 733 989 A1 décrit un matériau composite à base de polymères et de fibres naturelles comme de la sciure de bois, ainsi que des piquets destinés au palissage de la vigne fabriqués dans ce matériau composite. De manière à réduire et/ou éviter ce gâchis écologique, l'objet de l'invention réside dans la réalisation d'un accessoire agricole en matériau composite comprenant au moins une matrice en matériau plastique dans laquelle est incorporée une poudre de sarments de vigne.

On utilise donc les sarments de vigne comme matière première intégrée dans un matériau composite, ce qui permet d'éviter le brûlage systématique de ces sarments.

On peut ainsi minimiser les coûts de fabrication de certains accessoires agricoles tels que des piquets de palissage pour vigne, des tuteurs de vigne, des agrafes de maintien etc., en utilisant une matière première locale.

En outre, le matériau composite est un matériau imputrescible de par l'adjonction de sarments de vigne, ce qui est très avantageux si l'on utilise ce matériau dans la production d'outils d'extérieur tels que les piquets de palissage ou les tuteurs de plants de vigne ou analogue. Les sarments de vigne sont très avantageux car ils sont plus légers que la plupart des types de bois, ce qui permet d'obtenir in fine un matériau composite léger.

Selon une caractéristique de l'invention, la proportion de poudre de sarment de vigne est d'au moins 20% en poids par rapport à celui du matériau composite. A partir de 20%, on réduit significativement le coût de la matrice pétrolière. Préférentiellement, la proportion de poudre de sarment de vigne est comprise entre 20% et 70% en poids par rapport à celui du matériau composite.

Le matériau plastique de la matrice est un polymère choisi parmi un polypropylène ou un acide polylactique et leurs mélanges. L'utilisation de ces matériaux plastiques est avantageuse car ce sont des matériaux qui sont par définition recyclables, et biodégradables notamment pour l'acide polylactique.

L'invention a pour objet un accessoire agricole destiné au palissage des pieds de vigne et un procédé d'obtention de cet accessoire agricole, conformément aux revendications ci-annexées.

Selon l'invention, le procédé comprend les étapes suivantes :

- une première étape de broyage des sarments pour obtenir des granulats de sarments,
- une étape de séchage des granulats sarments jusqu'à ce que lesdits granulats de sarments présentent une humidité déterminée,
- une deuxième étape de broyage des granulats séchés jusqu'à l'obtention d'une poudre de sarments,
- une étape d'incorporation de la poudre de sarments dans une matrice en matériau plastique,
- la réalisation de l'accessoire agricole à partir du matériau composite ainsi obtenu.

Par exemple, l'étape d'incorporation peut consister en le mélange de la poudre de sarments avec la matrice plastique à chaud.

Selon une caractéristique de l'invention, la première étape de broyage comprend une première sous-étape dans laquelle les sarments sont réduits en copeaux d'une taille comprise entre sensiblement 150 mm et sensiblement 50 mm et une deuxième sous-étape dans laquelle les copeaux de sarments sont réduits en granulats d'une taille sensiblement inférieure à 20 mm, et préférentiellement de sensiblement 15 mm.

Selon une autre caractéristique de l'invention, la deuxième étape de broyage comprend une sous-étape de tamisage. Cette étape de tamisage permet d'obtenir une plus grande proportion de particules du même calibre.

Selon une autre caractéristique de l'invention, on passe de l'étape de séchage à la deuxième étape de broyage uniquement lorsque les granulats de sarments présentent une humidité inférieure ou égale à 10% par rapport à la masse d'un granulat.

Le taux d'humidité correspond au calcul consistant à soustraire la masse anhydre de la masse humide, de diviser le résultat de cette soustraction par la masse anhydre et de muliplier par 100 :

$$(\text{masse humide} - \text{masse anhydre}) \times 100 = \text{taux d'humidité}$$

masse anhydre

Selon une autre caractéristique de l'invention, la poudre de sarments de vigne comprend au moins 60 % des particules formant la poudre présentent une granulométrie comprise entre 300 microns et 800 microns et de préférence comprise entre 500 microns et 550 microns.

Ainsi, un accessoire agricole réalisé dans le matériau composite résiste aux conditions extérieures et dure dans le temps contrairement aux accessoires en bois ou en métal utilisés conventionnellement qui pourrissent ou rouillent assez rapidement.

Selon un mode de réalisation, l'accessoire agricole est un piquet de palissage conçu pour supporter des fils servant à palisser des sarments de vigne.

Dans la présente demande, on entend par piquet de palissage, un piquet utilisé pour le palissage, appelé piquet de tête lorsqu'il est positionné en bout de rang ou piquet intermédiaire lorsqu'il est positionné dans le rang, le rang désignant un rang de pieds de vigne. Un piquet de palissage est enfoncé dans le sol par frappe à l'aide d'une masse ou d'un bélier et est positionné de manière régulière dans un rang.

Selon un mode de réalisation, ledit accessoire agricole comprend une première extrémité destinée à être enfoncée dans le sol et une deuxième extrémité opposée libre, l'accessoire agricole présentant une portion centrale positionnée entre la première extrémité et la deuxième extrémité, ladite portion centrale comprenant au moins un logement ménagé sur une face de ladite portion centrale, ledit logement formant encoche étant conformé pour recevoir et maintenir au moins un fil porteur ou releveur de sarments et permettre l'enroulement dudit fil autour de l'accessoire agricole.

Ainsi, grâce à la portion centrale de l'accessoire agricole, on peut s'affranchir des moyens de liaison rapportés connus. On évite ainsi le remplacement régulier des moyens de fixation et le fil est facilement mis en tension sans nécessiter d'effort.

Selon un mode de réalisation, la portion centrale comprend une première face latérale et une deuxième face latérale, la première face latérale et la deuxième face latérale étant opposées par rapport à un axe longitudinal de l'accessoire agricole, un premier logement formant encoche et un deuxième logement formant encoche étant ménagés respectivement sur la première face latérale et sur la deuxième face latérale.

Selon un autre mode de réalisation, le premier logement formant encoche sur la première face latérale est positionné en regard du deuxième logement formant encoche sur la deuxième face latérale, ainsi, lorsque l'on enroule un fil autour de l'accessoire agricole, le fil est maintenu par le premier et le deuxième logement facilitant ainsi l'enroulement et le maintien sur l'accessoire agricole.

Selon un autre mode de réalisation, la première face latérale de la portion centrale comprend au moins deux logements positionnés à distance l'un de l'autre.

Selon un autre mode de réalisation, la deuxième face latérale de la portion centrale comprend au moins deux logements positionnés à distance l'un de l'autre. Ainsi, il est possible de fixer plusieurs fils à des hauteurs différentes.

De préférence, la pluralité de logements ménagés sur la première face latérale et/ou la deuxième face latérale sont avantageusement espacés les uns des autres de manière régulière.

Selon un autre mode de réalisation, la première extrémité de l'accessoire agricole destinée à être enfoncée dans le sol, est en forme de pointe. De préférence, la première extrémité présente une section en croix. La forme de la première extrémité est conçue pour faciliter la pénétration et améliorer l'ancrage de l'accessoire agricole dans le sol.

Selon un autre mode de réalisation, l'accessoire agricole est de forme sensiblement parallélépipédique, ce qui permet de stocker plus d'accessoires agricoles par palette de stockage. Grâce à la forme de piquet parallélépipédique, on peut stocker jusqu'à environ 400 accessoires agricoles par palette contre 100 dans l'état de l'art actuel.

Selon l'invention, ledit accessoire agricole est une agrafe de palissage présentant au moins un logement conformé pour maintenir au moins deux fils releveurs serrés.

Dans la présente demande et selon l'invention, on entend par agrafe de palissage, une pièce posée sur des fils releveurs utilisés pour soutenir la vigne, ladite pièce étant conformée pour maintenir les fils releveurs serrés afin d'éviter les entassements de végétation et les sorties de sarments de vigne.

Selon l'invention, ledit accessoire agricole comprend un premier logement et un deuxième logement, le premier logement étant orienté angulairement par rapport au deuxième logement de sorte qu'une extrémité du premier logement est confondue avec une extrémité du deuxième logement, formant une section d'étranglement conformée pour retenir les fils releveurs.

Selon un mode de réalisation, l'accessoire agricole est de forme sensiblement cylindrique.

Selon un mode de réalisation, chaque logement présente une forme oblongue dont une extrémité est ouverte.

Préférentiellement, l'extrémité ouverte du premier logement est confondue avec l'extrémité ouverte du deuxième logement.

L'invention sera mieux comprise, grâce à la description ci-après, qui se rapporte à des modes de réalisation donnés à titre d'exemples non limitatifs et expliqués avec référence aux dessins schématiques annexés, dans lesquels:

- la figure 1 représente une vue en perspective d'un piquet de palissage,
- la figure 2 représente une vue de face du piquet représenté en figure 1,
- la figure 3 représente une vue en perspective d'une variante d'une extrémité du piquet représenté en figure 1,
- la figure 4 représente une vue de face d'une agrafe de palissage selon l'invention,
- la figure 5 est une vue en perspective de l'agrafe de palissage représentée en figure 3, en condition d'utilisation.

Le procédé d'obtention du matériau composite est décrit si après.

Pour réaliser un matériau composite tel que celui proposé pour la réalisation d'un accessoire agricole selon par l'invention, on doit tout d'abord ramasser les sarments de vigne taillés, le ramassage étant réalisé soit manuellement, soit mécaniquement. Lorsque le ramassage est réalisé mécaniquement, on utilise une machine à couteaux rotatifs qui collecte les sarments sur le sol.

Pendant le ramassage, les couteaux rotatifs broie une première fois les sarments en copeaux. Les copeaux sont ensuite expulsés dans une benne de stockage de la machine.

Une fois l'ensemble des sarments ramassés et réduits en copeaux, la benne est déversée dans un déchiqueteur qui se charge de réduire les copeaux de sarments en granulats. La taille des granulats est sensiblement de 15 mm, ce qui est avantageux car des granulats de cette taille sèchent plus vite que des granulats de taille supérieure.

Lorsque l'ensemble des copeaux est réduit en granulats, ces derniers sont mis à sécher. Le temps de séchage est de 3 à 6 mois suivant le taux d'humidité des granulats. Préférentiellement, il est considéré que les granulats sont secs lorsque le taux d'humidité de ceux-ci est inférieur ou égal à 9% par rapport à la masse d'un granulat.

Selon un mode de réalisation, l'étape de séchage peut intervenir avant la réduction des copeaux en granulats.

Une fois séchés, les granulats sont versés dans un affineur comprenant une grille présentant des orifices de sensiblement 800 microns afin de réaliser le broyage des granulats. Le résultat du broyage est tamisé pour délivrer une poudre de sarments présentant une granulométrie comprise entre 800 microns et 300 microns.

La poudre de sarments obtenue est ensuite transportée et incorporée dans une matrice en matériau plastique afin de réaliser le matériau composite. Avantageusement, la poudre de sarment incorporée dans la matrice en matériau plastique est en proportion d'au moins 30% par rapport au poids du matériau composite. Pour des questions environnementales, la matrice en matériau plastique est un polymère choisi parmi un polypropylène ou un acide polylactique et leurs mélanges.

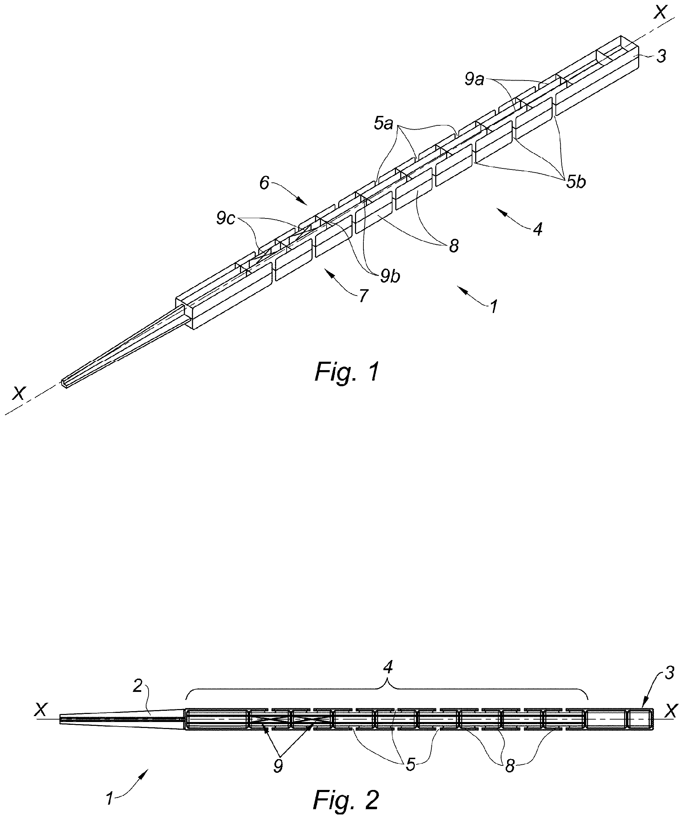

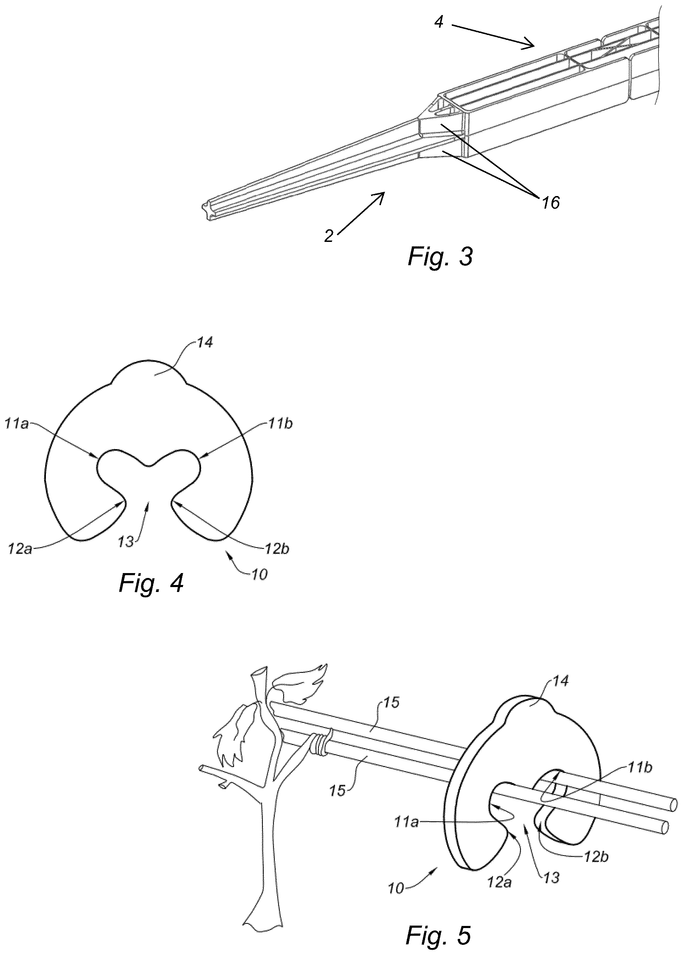

Comme visibles sur les figures 1 et 2, l'accessoire agricole peut être par exemple un piquet de palissage ou bien une agrafe de palissage de fil comme illustré aux figures 3 et 4.

Comme représenté aux figures 1 et 2, le piquet de palissage 1 comprend une première extrémité 2 effilée en forme de pointe et une deuxième extrémité 3 opposée à la première extrémité 2. La première extrémité 2 est conçue pour s'enfoncer dans le sol et présente une section en croix comme on peut le voir sur la figure 1.

Le piquet de palissage 1 comprend également une portion centrale 4 comportant une première face latérale 6 et une deuxième face latérale 7, la première face latérale 6 est opposée à la deuxième face latérale 7 par rapport à un axe longitudinal X-X du piquet de palissage 1.

Comme illustré aux figures 1 et 2, la première face latérale 6 et la deuxième face latérale 7 sont pourvues d'une pluralité de logements 5a, 5b formant encoche conçus pour recevoir et maintenir des fils de palissage de type releveur ou porteur. La pluralité de logements 5a, 5b est répartie de manière régulière sur la première face latérale 6 et sur la deuxième face latérale 7. Chaque logement 5a ménagé sur la première face latérale 6 est positionné en regard d'un logement 5b ménagé sur la deuxième face latérale 7.

La première face latérale 6 et la deuxième face latérale 7 comprennent une pluralité de portions planes 8, chaque logement 5a, 5b étant ménagé entre deux portions planes 8.

Avantageusement, le piquet de palissage 1 est de forme sensiblement parallélépipédique.

Dans l'exemple illustré aux figures 1 et 2, le piquet de palissage 1 présente une structure creuse présentant dans sa partie centrale des nervures 9a, 9b, 9c de renfort positionnées entre la première face latérale 6 et la deuxième face latérale 7.

Les nervures 9a s'étendent dans une direction sensiblement parallèle à l'axe longitudinal X-X et relient la première extrémité 2 à la deuxième extrémité 3. Les nervures 9a s'étendent sensiblement le long de toute la portion centrale 4.

Les nervures 9b s'étendent dans une direction sensiblement perpendiculaire à l'axe longitudinal X-X et relient une portion plane 8 de la première face latérale 6 avec une portion plane 8 de la deuxième face latérale 7.

Les nervures 9c se présentent sous la forme de croisillons de renfort positionnés de préférence au niveau de la jonction de la portion centrale 4 et la première extrémité 2 du piquet de palissage 1.

De préférence et comme montré en figure 1, le piquet de palissage 1 est symétrique par rapport à l'axe longitudinal X-X.

En variante représentée en figure 3, la première extrémité 2 du piquet de palissage 1 comprend au moins un organe d'enfoncement 16 de section triangulaire. Ledit organe d'enfoncement 16 est conformé pour faciliter l'enfoncement de la première extrémité 2 du piquet de palissage 1 dans le sol.

Avantageusement, la deuxième extrémité 3 présente une surface plane conformée pour recevoir une masse destinée à l'enfoncement du piquet de palissage 1 dans le sol.

Lors d'un palissage, on enfonce les piquets de palissage 1 dans le sol à l'aide d'une masse qui vient frapper la deuxième extrémité 3 dudit piquet 1. Pour construire une structure de palissage il faut au moins deux piquets de palissage 1 conformément à l'invention.

Une fois les piquets de palissage 1 plantés à distance les uns des autres, on tend les fils releveurs et porteurs entre ces piquets 1. Les fils sont reçus dans les logements 5a, 5b de chaque piquet 1 et maintenus dans ces logements 5a, 5b par enroulement autour du piquet 1.

L'agrafe de palissage 10 selon l'invention va maintenant être décrite en référence aux figures 4 et 5.

L'agrafe de palissage 10 est de forme sensiblement cylindrique. L'agrafe de palissage 10 comprend deux logements 11a, 11b conformés chacun pour maintenir au moins un fil releveur 15 serré.

Chaque logement 11a, 11b présente une forme oblongue dont une extrémité 12a, 12b est ouverte.

Le premier logement 11a est orienté angulairement par rapport au deuxième logement 11b de sorte que l'extrémité ouverte 12a du premier logement 11a est confondu avec l'extrémité ouverte 12b du deuxième logement 11b formant une section d'étranglement 13 conformée pour retenir les fils releveurs 15.

L'agrafe de palissage 10 comprend en outre une portion saillante 14 positionnée à l'opposé de la section d'étranglement 13. La portion saillante 14 facilite la préhension de l'agrafe de palissage 10.

Bien entendu, l'invention n'est pas limitée aux modes de réalisation décrits et représentés aux figures annexées. Des modifications restent possibles, notamment du point de vue de la constitution des divers éléments ou par substitution d'équivalents techniques, sans sortir pour autant du domaine de protection de l'invention, dans le cadre des revendications ci-annexées.

**Revendications**

1. Accessoire agricole (1, 10) destiné au palissage de pieds de vigne, réalisé à partir d'un matériau composite comprenant au moins une matrice en matériau plastique dans laquelle est incorporée une poudre de sarments de vigne et dans lequel le matériau plastique de la matrice est un polymère choisi parmi un polypropylène ou un acide polylactique et leurs mélanges, ledit accessoire agricole (10) étant une agrafe de palissage (10) présentant au moins un logement (11a, 11b) conformé pour maintenir au moins deux fils releveurs (15) serrés, ledit accessoire agricole (10) comprenant un premier logement (11a) et un deuxième logement (11b), le premier logement (11a) étant orienté angulairement par rapport au deuxième logement (11b) de sorte qu'une extrémité (12a) du premier logement (11a) est confondue avec une extrémité (12b) du deuxième logement (11b), formant une section d'étranglement (13) conformée pour retenir les fils releveurs (15).

2. Accessoire agricole selon la revendication 1, dans lequel la proportion de poudre de sarment de vigne dans le matériau composite est d'au moins 20% en poids par rapport à celui du matériau composite.

3. Procédé d'obtention d'un accessoire agricole selon l'une quelconque des revendications précédentes, ledit procédé d'obtention comprenant les étapes suivantes :

   - une première étape de broyage des sarments pour obtenir des granulats de sarments,
   - une étape de séchage des granulats sarments jusqu'à ce que lesdits granulats de sarments présentent une humidité déterminée,
   - une deuxième étape de broyage des granulats séchés jusqu'à l'obtention d'une poudre de sarments,
   - une étape d'incorporation de la poudre de sarments dans une matrice en matériau plastique,
   - la réalisation de l'accessoire agricole à partir du matériau composite ainsi obtenu.

4. Procédé selon la revendication 3, dans lequel la première étape de broyage comprend une première sous-étape dans laquelle les sarments sont réduits en copeaux d'une taille comprise entre sensiblement 150 mm et sensiblement 50 mm, et une deuxième sous-étape dans laquelle les copeaux de sarments sont réduits en granulats d'une taille inférieure à sensiblement 20 mm.

**5.** Procédé selon l'une quelconque des revendications 3 ou 4, dans lequel on passe de l'étape de séchage à la deuxième étape de broyage uniquement lorsque les granulats de sarments présentent une humidité inférieure ou égale à 10% par rapport à la masse d'un granulat.

**6.** Procédé selon l'une quelconque des revendications 3 à 5, dans lequel la deuxième étape de broyage comprend une sous-étape de tamisage.

**7.** Procédé selon l'une quelconque des revendications 3 à 6, dans lequel la poudre de sarments de vigne comprend au moins 60 % des particules formant la poudre présentent une granulométrie comprise entre 300 microns et 800 microns.

**Patentansprüche**

**1.** Landwirtschaftliches Gerät (1, 10), bestimmt für das Anspalieren von Weinstöcken, durchgeführt auf der Grundlage eines Verbundmaterials, umfassend mindestens eine Matrix aus Plastikmaterial, in die ein Pulver aus Weinranken integriert ist, und wobei das Plastikmaterial der Matrix ein Polymer ist, ausgewählt aus einem Polypropylen oder einer Polymilchsäure und ihren Mischungen, wobei das landwirtschaftliche Gerät (10) eine Spalierklammer (10) ist, die mindestens eine angepasste Aufnahme (11a, 11b) aufweist, die ausgebildet ist, um mindestens zwei Spalierdrähte (15) festgezogen zu halten, wobei das landwirtschaftliche Gerät (10) eine erste Aufnahme (11a) und eine zweite Aufnahme (11b) umfasst, wobei die erste Aufnahme (11a) winklig mit Bezug auf die zweite Aufnahme (11b) ausgerichtet ist, sodass ein Ende (12a) der ersten Aufnahme (11a) mit einem Ende (12b) der zweiten Aufnahme (11b) übereinstimmt, wodurch einen Verengungsabschnitt (13) gebildet wird, der ausgebildet ist, um die Spalierdrähte (15) zurückzuhalten.

**2.** Landwirtschaftliches Gerät nach Anspruch 1, wobei die Proportion von Pulver aus Weinranken im Verbundmaterial mindestens 20 Gew.-% mit Bezug auf dasjenige des Verbundmaterials ist.

**3.** Verfahren zum Erhalt eines landwirtschaftlichen Geräts nach einem der vorhergehenden Ansprüche, wobei das Verfahren zum Erhalt die folgenden Schritte umfasst:

- einen ersten Schritt des Zerkleinerns der Ranken, um Rankengranulate zu erhalten,
- einen Schritt des Trocknens der Rankengranulate, bis die Rankengranulate eine bestimmte Feuchtigkeit aufweisen,
- einen zweiten Schritt des Zerkleinerns der getrockneten Granulate bis zum Erhalt eines Rankenpulvers,
- einen Schritt des Aufnehmens des Rankenpulvers in eine Matrix aus Plastikmaterial,
- das Herstellen des landwirtschaftlichen Geräts auf der Grundlage des so erhaltenen Verbundmaterials.

**4.** Verfahren nach Anspruch 3, wobei der erste Schritt des Zerkleinerns einen ersten Unterschritt umfasst, in dem die Ranken zu Spänen einer Größe reduziert werden, die im Bereich zwischen im Wesentlichen 150 mm und im Wesentlichen 50 mm liegt, und einen zweiten Unterschritt, in dem die Rankenspäne zu Granulate einer Größe von weniger als im Wesentlichen 20 mm reduziert werden.

**5.** Verfahren nach einem der Ansprüche 3 oder 4, wobei vom Schritt des Trocknens zum zweiten Schritt des Zerkleinerns nur dann übergegangen wird, wenn die Rankengranulate eine Feuchtigkeit von weniger als oder gleich 10 % mit Bezug auf die Masse eines Granulats aufweisen.

**6.** Verfahren nach einem der Ansprüche 3 bis 5, wobei der zweite Schritt des Zerkleinerns einen Unterschritt des Siebens aufweist.

**7.** Verfahren nach einem der Ansprüche 3 bis 6, wobei das Pulver aus Weinranken mindestens 60 % der Partikel umfasst, die das Pulver bilden, das eine Granulometrie aufweist, die im Bereich zwischen 300 Mikrometer und 800 Mikrometer liegt

**Claims**

**1.** An agricultural accessory (1, 10) intended for the trellising of vine stocks, made from a composite material comprising at least one matrix made of plastic material in which a vine shoots powder is incorporated and in which the plastic material of the matrix is a polymer selected from polypropylene or polylactic acid and mixtures thereof, said agricultural accessory (10) being a trellising clip (10) having at least one housing (11a, 11b) shaped so as to hold at least two tightened training wires (15), said agricultural accessory (10) comprising a first housing (11a) and a second housing (11b), the first housing (11a) being angularly oriented with respect to the second housing (11b) such that an end (12a) of the first housing (11a) merges with an end (12b) of the second housing (11b), forming a restriction section (13) shaped so as to retain the training wires (15).

2. The agricultural accessory according to claim 1, wherein the proportion of vine shoots powder in the composite material is at least 20% in weight relative to the composite material.

3. Manufacturing method for obtaining an agricultural accessory according to any one of the preceding claims, said obtainment method comprising the following steps:

- a first step of crushing the shoots in order to obtain shoots aggregates,
- a step of drying the shoots aggregates until said shoots aggregates have a determined humidity,
- a second step of crushing the dried aggregates until obtaining a shoots powder,
- a step of incorporating the shoots powder into a matrix made of plastic material,
- the production of the agricultural accessory from the composite material thus obtained.

4. The manufacturing method according to claim 3, wherein the first crushing step comprises a first sub-step in which the shoots are reduced into shavings with a size comprised between substantially 150 mm and substantially 50 mm, and a second sub-step in which the shoots shavings are reduced into aggregates with a size smaller than substantially 20 mm.

5. The manufacturing method according to any one of claims 3 or 4, wherein the passage from the drying step to the second crushing step is performed only when the shoots aggregates have a humidity lower than or equal to 10% relative to the mass of an aggregate.

6. The manufacturing method according to any one of claims 3 to 5, wherein the second crushing step comprises a sieving sub-step.

7. The manufacturing method according to any one of claims 3 to 6, wherein the vine shoots powder comprises at least 60% of the particles forming the powder, which have a grain-size distribution comprised between 300 microns and 800 microns.

Fig. 1

Fig. 2

*Fig. 3*

*Fig. 4*

*Fig. 5*

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2733989 A1

**Littérature non-brevet citée dans la description**

- **GEORGIOS A. NTALOS ; ATHANASIOS H. GRIG-ORIOU.** Characterization and utilisation of vine prunings as a wood substitute for particleboard production. *Industrial Crops and Products,* 2002, vol. 16, 59-68